# EUROPÄISCHE PATENTSCHRIFT

(11) **EP 0 800 891 B1**
(45) Veröffentlichungstag und Bekanntmachung des Hinweises auf die Patenterteilung: **05.08.1998**
(21) Anmeldenummer: 97105765.8
(22) Anmeldetag: 08.04.1997
(51) Int. Cl.: B23P 15/40, B21D 53/64, A01D 34/53, B23D 65/02

(54) **Verfahren zur Herstellung von Schneidelementen**
Method for manufacturing cutting elements
Procédé de fabrication des éléments de coupe

(30) Priorität: 12.04.1996 DE 19614425
(43) Veröffentlichungstag der Anmeldung: 15.10.1997
(73) Patentinhaber: Maschinenfabrik Bermatingen GmbH & Co., D-88697 Bermatingen (DE)
(72) Erfinder: Lehmann, Franz, 88677 Markdorf (DE)
(74) Vertreter: Engelhardt, Guido, Dipl.-Ing.

(56) Entgegenhaltungen:
- EP-A- 0 328 080
- DE-B- 1 256 871
- FR-A- 2 557 005
- GB-A- 280 337
- US-A- 2 063 067
- US-A- 3 054 247
- US-A- 4 660 453

## Beschreibung

Die Erfindung bezieht sich auf ein Verfahren zur Herstellung von mit Zähnen versehenen Schneidelemente für Spindelmäher oder ähnliche Bodenbearbeitungsmaschinen.

Die Herstellung von gezahnten Schneidelementen ist sehr aufwendig und äußerst kostenintensiv, da die Zähne, um eine ausreichende Standzeit zu erhalten, aus Vollmaterial herausgefräst werden müssen. Mit derartigen Schneidelementen versehene Spindelmäher sind daher teuer und somit oftmals nicht zu verkaufen.

Aufgabe der Erfindung ist es daher, ein Verfahren zu schaffen, mittels dem es möglich ist, mit Zähnen versehene Schneidelemente für Spindelmäher oder ähnliche Bodenbearbeitungsmaschinen auf einfache Weise mit geringem Material-, Werkzeug-und Arbeitsaufwand herzustellen, so daß eine kostengünstige Fertigung der Schneidelemente möglich ist und der Einsatzbereich von Spindelmähern erweitert werden kann. Vor allem soll es möglich sein, Schneidelemente mit geringem Außendurchmesser ohne Schwierigkeiten herzustellen, die eine hohe Standzeit aufweisen und durch die trotz hoher Drehzahlen des Spindelmähers größere Steine nicht weggeschleudert werden können, so daß die dadurch bedingte Unfallgefahr in einem erheblichen Maße reduziert wird.

Gemäß der Erfindung ist das Verfahren zur Herstellung von mit Zähnen versehenen Schneidelemente für Spindelmäher oder ähnliche Bodenbearbeitungsmaschinen mit folgenden Verfahrensschritten:
zunächst werden aus einer Tafel aus einem vorzugsweise hochlegierten Stahl durch einen dünnen gebündelten Laserstrahl, einen Plasma-Schneidstrahl oder durch einen Strahl nach dem Wassserstrahl-Schneideverfahren einzelne Ringsegmente oder Ringe ausgeschnitten und dabei oder danach werden die Ringsegmente oder die Ringe von deren Außendurchmesser oder von einem Grundkreis aus entsprechend der jeweiligen Länge der Zähne und/oder einer gewünschten Zahntiefe von außen nach innen bzw. von innen nach außen ein- oder mehrfach ausgeschnitten, sodann werden die Ringsegmente oder die Ringe erwärmt, schneckenförmig gewunden und im Bereich der Spitzen der Zähne seitlich ausgedrückt, und zwar derart, daß die äußere Schneidkante gegenüber der Schnittrichtung um einen Winkel β zurückfällt, und abschließend werden die Ringsegmente und der Ring durch Wärmebehandlung gehärtet oder ganz oder teilweise mit einer Hartchromschicht versehen.

Zweckmäßig ist es hierbei, die Einschnitte in die Ringsegmente oder die Ringe in Drehrichtung einer diese tragenden rotierend antreibbaren Schnecke konvex gekrümmt oder geradlinig, vorzugsweise tangential zu einem Grundkreis verlaufend, vorzunehmen.

Des weiteren ist es angebracht, die Spitzen der Zähne um die Materialstärke der Ringsegmente bzw. der Ringe oder geringer als diese seitlich auszudrücken. Dadurch wird bei der Bearbeitung von fasrigen Gütern ein Einhaken des Gutes vermieden.

Durch das Ausdrücken sollten die Zähne der Ringsegmente oder der Ringe als Schneidelemente der Schnecke gegenüber deren Drehachse um einen Winkel γ angestellt werden. Auf diese Weise ergibt sich eine gewünschte Komponente des ziehenden Schnittes, so daß eine geringe Schneidkraft und eine hohe Funktionssicherheit gegeben sind.

Das Ausdrücken der Zähne mit den Schneidewinkeln β und γ sowie die Verformung der Ringsegmente bzw. der Ringe zum Anbringen an einer Schnecke läßt sich in einem Arbeitsgang mit einem Presswerkzeug bewerkstelligen, das dadurch gekennzeichnet ist, daß ringförmige Verformungsflächen zwischen einer oberen und einer unteren Werkzeughälfte schneckenförmig gewunden ausgebildet sind und die äußeren Randzonen der Werkzeughälften den Zähnen der Ringsegmente bzw. der Ringe entsprechende Verzahnungen tragen.

Das erfindungsgemäße Verfahren ermöglicht es, mit Zähnen versehene Schneidelemente in Form von Ringsegmenten oder Ringen, die an einer Schnecke als Träger anzubringen sind, auf einfache und wirtschaftliche Weise herzustellen, so daß Spindelmäher, die mit diesen Schneidelementen bestückt werden, preisgünstig angeboten werden können. Die Ringsegmente und/oder Ringe können nämlich nunmehr aus einer Tafel wirtschaftlich herausgeschnitten und in einem Arbeitsgang entsprechend der Form der Schnecke gewunden werden, wobei gleichzeitig auch die Zähne seitlich ausgedrückt werden. Der Material- und Zeitaufwand ist demnach gering. Des weiteren ist von Vorteil, daß die Schneidelemente mit geringem Außendurchmesser herzustellen sind, beim Einsatz dieser Schneidelemente werden demnach trotz hoher Umfangsgeschwindigkeiten größere Steine nicht weggeschleudert, sondern nur seitlich verschoben. Unfälle werden somit weitgehend vermieden. Auch können einzelne verschlissene Ringsegmente oder Ringe leicht ausgetauscht werden, ein vielseitiger wirtschaftlicher Einsatz eines mit den vorschlagsgemäß hergestellten Schneidelementen bestückten Spindelmähers ist daher gegeben.

In der Zeichnung ist ein Ausführungsbeispiel eines Spindelmähers, der mit gemäß der Erfindung hergestellten Ringsegmenten versehen ist, dargestellt und dieser sowie die Herstellung der Ringsegmente sind nachfolgend im einzelnen beschrieben. Hierbei zeigt:
- Figur 1: den an einem Fahrzeug angebauten Spindelmäher in Draufsicht,
- Figur 2: die bei dem Spindelmäher nach Figur 1 vorgesehene mit einem Ringsegment bestückte Schnecke in einer vergrößerten Darstellung,
- Figur 3: eines der ausgeschnittenen Ringsegmente, in Vorderansicht,
- Figuren 4 und 5: ein Preßwerkzeug zur Verformung der Ringsegmente nach Figur 3,
- Figur 6: einen Schnitt durch das Preßwerkzeug nach den Figuren 4 und 5 während eines Preßvorganges,
- Figur 7: das verformte Ringsegment nach Figur 3, in Draufsicht, und
- Figur 8: das verformte Ringsegment in einem Schnitt nach der Linie VIII - VIII der Figur 7.

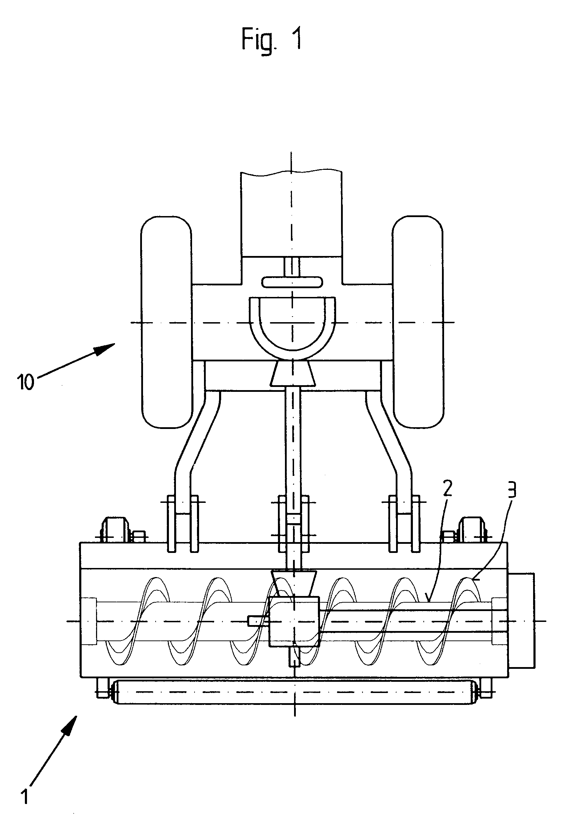

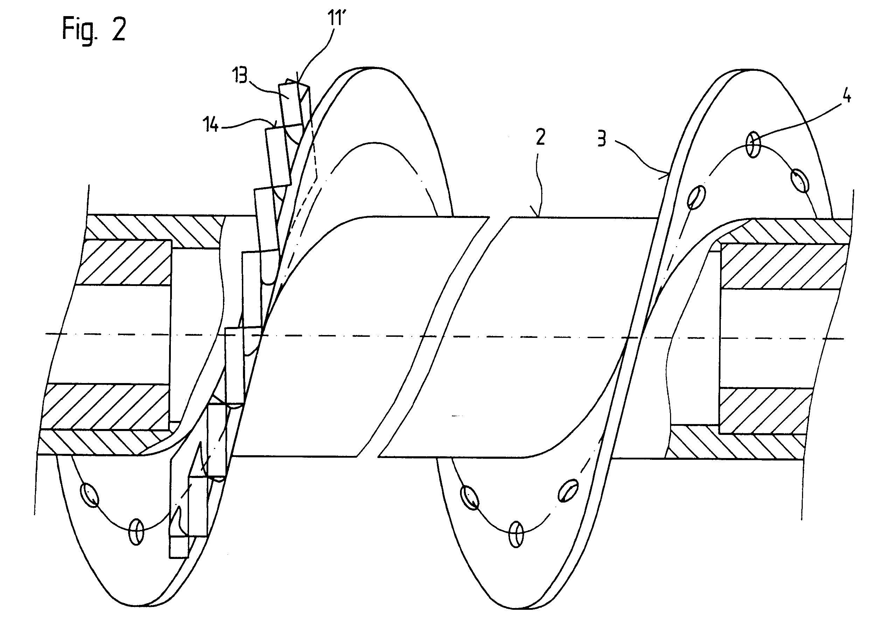

Der in Figur 1 dargestellte und mit 1 bezeichnete Spindelmäher ist an einem Fahrzeug 10 angehängt und dient zum Mähen von Gras mittels einer Schnecke 3, die auf einer durch eine an dem Fahrzeug 10 vorgesehenen Zapfwelle antreibbaren Welle 2 aufgeschweißt ist. An der Schnecke 3 sind, wie dies insbesondere der Figur 2 zu entnehmen ist, verzahnte Schneidelemente in Form von Ringsegmenten 11' befestigt, die mittels in in die Schnecke 3 eingearbeiteter Bohrungen 4 einzusetzender Schrauben auswechselbar befestigt sind.

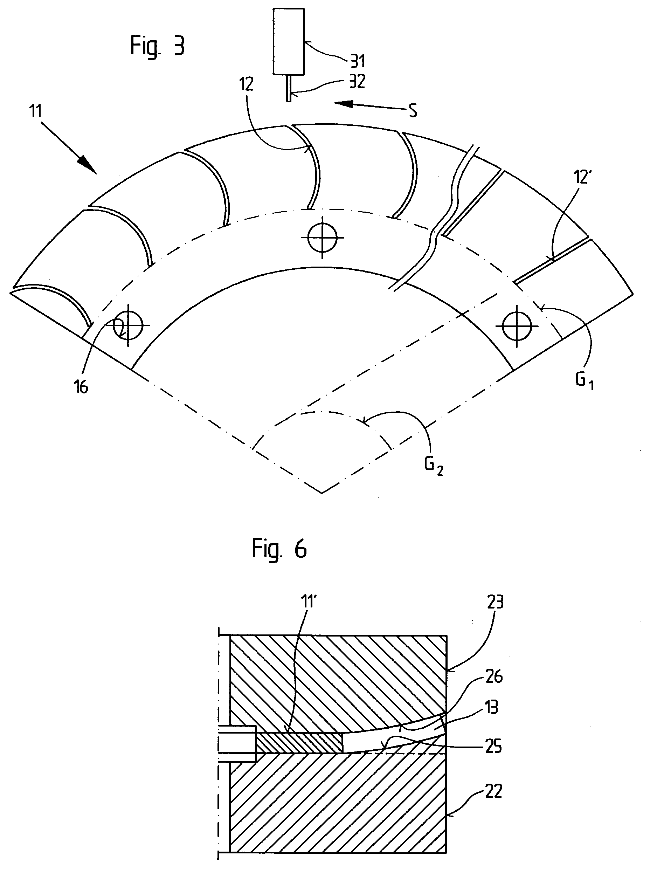

Die Herstellung der gewundenen Ringsegmente 11' erfolgt in der Weise, daß zunächst aus einer Tafel aus einem hochlegierten Stahl einzelne Ringsegmente 11, wie dies in Figur 3 gezeigt ist, mit Hilfe eines dünnen gebündelten Laserstrahls 32 ausgeschnitten werden, in dem ein den Laserstrahl 32 erzeugendes Schneidwerkzeug 31 nach einem vorgegebenen Programm verfahren wird. Dabei wird nicht nur das Ringsegment 11 ausgeschnitten, sondern in dieses werden auch Einschnitte 12 oder 12' sowie Bohrungen 16 zur späteren Befestigung an der Schnecke 3 eingearbeitet.

Die Einschnitte 12 sind hierbei in Schnittrichtung S konvex gekrümmt ausgebildet, die Einschnitte 12' laufen dagegen geradlinig tangential zu einem Grundkreis G₂. Das Einschneiden kann von außen nach innen bis zu einem Grundkreis G₁ vorgenommen werden, es ist aber auch möglich, von dem Grundkreis G₁ aus die Einschnitte 12 bzw. 12' von innen nach außen ein- oder mehrfach in das Ringsegment 11 einzuarbeiten.

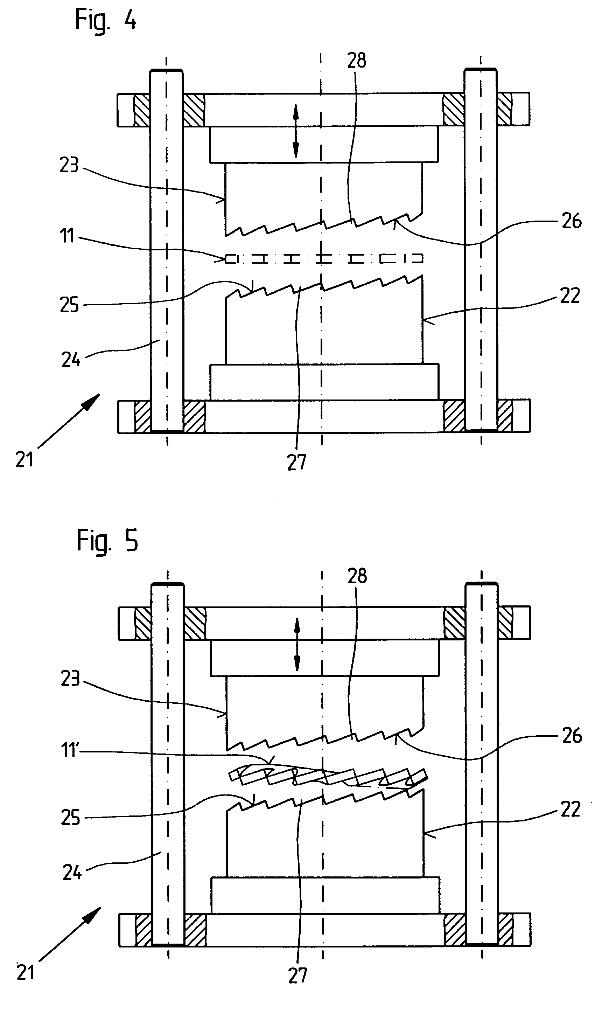

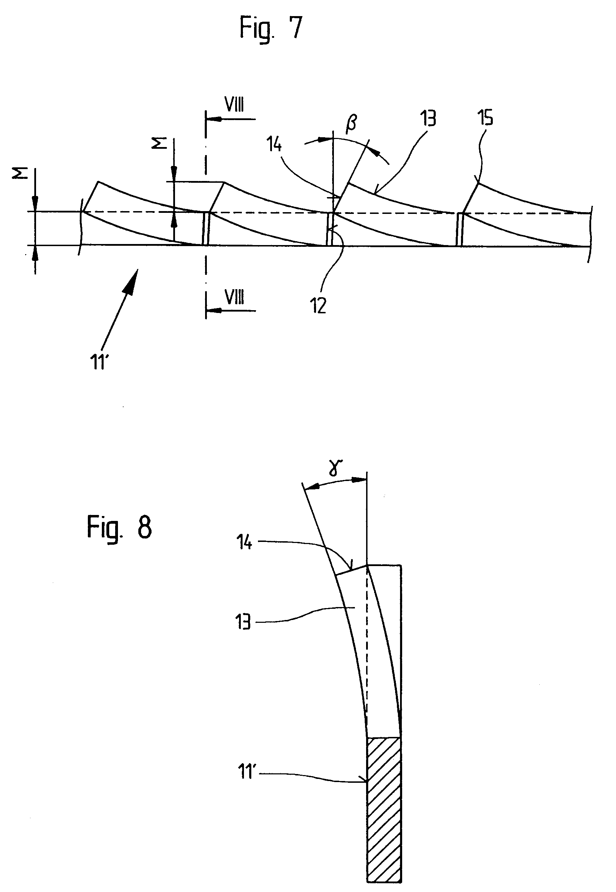

Sodann werden die Ringsegmente 11 erwärmt und in einem in den Figuren 4 und 5 dargestellten Preßwerkzeug 21 verformt, das dazu eine untere ortsfest angeordnete Werkzeughälfte 22 und eine obere auf Führungsstangen 24 zustellbar geführte Werkzeughälfte 23 aufweist. Die einander zugekehrten Verformungsflächen 25 und 26 der Werkzeughälften 22 und 23 sind dazu schneckenförmig gewunden ausgebildet und mit Verzahnungen 27 und 28 versehen, so daß zwischen zwei Einschnitten 12 bzw. 12' Zähne 13, wie dies den Figuren 6 und 7 zu entnehmen ist, seitlich ausgebogen werden können. Die Spitzen 15 der Zähne 13 werden dabei derart um die Materialstärke M des Ringsegmentes 11 ausgedrückt, daß die äußeren Schneidkanten 14 der Zähne 13 gegenüber der Schnttrichtung S um einen Winkel β zurückfallen. Außerdem werden die Zähne 13 gegenüber der Drehachse der Schnecke 3 um einen Winkel γ, wie dies in Figur 8 gezeigt ist, angestellt, ein sauberer Schnitt, ohne daß faseriges Gut zwischen den Zähnen 13 hängen bleibt, ist dadurch gewährleistet.

Unmittelbar nach dem Verformen der Ringsegmente 11' werden diese durch eine Wärmebehandlung ganz oder teilweise gehärtet oder mit einer Hartchromschicht versehen, die Herstellung der Ringsegmente 11' ist somit ohne großen Fertigungsaufwand in kurzer Zeit auf wirtschaftliche Weise zu bewerkstelligen.

## Patentansprüche

1. Verfahren zur Herstellung von mit Zähnen versehenen Schneidelemente für Spindelmäher oder ähnliche Bodenbearbeitungsmaschinen,
mit folgenden Verfahrensschritten
zunächst werden aus einer Tafel vorzugsweise aus einem hochlegierten Stahl durch einen dünnen gebündelten Laserstrahl (32), einen Plasma-Schneidstrahl oder durch einen Strahl nach dem Wassserstrahl-Schneideverfahren einzelne Ringsegmente (11) oder Ringe ausgeschnitten, und dabei oder danach werden die Ringsegmente (11) oder die Ringe von deren Außendurchmesser oder von einem Grundkreis (G₁) aus entsprechend der jeweiligen Länge der Zähne (13) und/oder einer gewünschten Zahntiefe von außen nach innen bzw. von innen nach außen ein- oder mehrfach ausgeschnitten,
sodann werden die Ringsegmente (11) oder die Ringe erwärmt, schneckenförmig gewunden und im Bereich der Spitzen der Zähne (13) seitlich ausgedrückt, und zwar derart, daß die äußere Schneidkante (14) gegenüber der Schnittrichtung (S) um einen Winkel (β) zurückfällt, und abschließend werden die Ringsegmente (11') und der Ring durch Wärmebehandlung gehärtet oder ganz oder teilweise mit einer Hartchromschicht versehen.

2. Verfahren nach Anspruch 1 oder 2,
**dadurch gekennzeichnet,**
daß die Einschnitte (12, 12') in die Ringsegmente (11) oder die Ringe in Drehrichtung einer diese tragenden rotierend antreibbaren Schnecke (3) konvex gekrümmt oder geradlinig, vorzugsweise tangential zu einem Grundkreis (G₂) verlaufend, vorgenommen werden.

3. Verfahren nach Anspruch 1 oder 2,
**dadurch gekennzeichnet,**
daß die Spitzen (15) der Zähne (13) um die Materialstärke (M) der Ringsegmente (11') bzw. der Ringe oder geringer als diese seitlich ausgedrückt werden.

4. Verfahren nach einem oder mehreren der Ansprüche 1 bis 3,
**dadurch gekennzeichnet,**
daß die Zähne (13) der Ringsegmente (11') oder der Ringe als Schneidelemente der Schnecke (3) gegenüber deren Drehachse um einen Winkel γ angestellt werden.

5. Verfahren nach einem oder mehreren der Ansprüche 1 bis 4,
**dadurch gekennzeichnet,**
daß ein Presswerkzeug verwendet wird, wobei die ringförmigen Verformungsflächen (25, 26) einer oberen und einer unteren Werkzeughälfte (22 bzw. 23) schneckenförmig gewunden ausgebildet sind und die äußeren Randzonen der Werkzeughälften (22, 23) des Presswerkzeugs den Zähnen (13) der Ringsegmente (11') bzw. der Ringe entsprechende Verzahnungen tragen.

## Claims

1. A method for manufacturing cutting elements provided with teeth for reel mowers or other cultivation machines,
having the following process steps:
individual ring segments (11) or the rings are first cut out of a plate of preferably high-alloy steel by means of a concentrated laser beam (32), a plasma cutting jet or by a jet in accordance with the water jet cutting method and, in or after this process, the ring segments (11) or the rings are cut out from the outside inwards or from the inside outwards once or several times from their external diameter or from a base circle (G₁) according to the corresponding length of the teeth (13) and/or a desired tooth depth, after which the ring segments (11) or the rings are heated, wound in a helical shape and pressed out sideways in the area of the tips of the teeth (13) in such a way that the outer cutting edge (14) is positioned at an angle (β) in relation to the cutting direction (S), and finally the ring segments (11') and the ring are hardened by heat treatment or are given a complete or partial hard chromium-plated coating.

2. The method in accordance with Claim 1,
**characterised in that,**
The indentations (12, 12') in the ring segments (11) or the rings are made in the direction of rotation of a driven screw (3) which carries the ring segments (11) or the rings and are either convexly curved or straight, preferably aligned at a tangent to a base circle (G₂).

3. The method in accordance with Claim 1 or 2,
**characterised in that,**
the tips (15) of the teeth (13) are pushed out to the side by the thickness of the material (M) of the ring segments (11') or the rings, or by a distance less than this.

4. The method in accordance with one or more of Claims 1 to 3,
**characterised in that,**
the teeth (13) of the ring segments (11') or the rings are positioned as cutting elements of the screw (3) at an angle γ in relation to its axis of rotation.

5. The method in accordance with one or more of Claims 1 to 4,
**characterised in that,**
a pressing tool is used, with the ring-shaped forming surfaces (25, 26) of an upper and a lower die half (22 or 23) being in a helically coiled configuration and with the external boundary zones of the die halves (22, 23) of the pressing tool carrying appropriate tooth profiles for the teeth (13) of the ring segments (11') or the rings.

## Revendications

1. Procédé de fabrication d'éléments de coupe dentés pour tondeuses à entraînement par roues latérales et des outils de labourage du sol semblables,
caractérisé par les phases suivantes:
moyennant un mince rayon laser en faisceau (32), un jet de coupe au plasma ou un jet selon le procédé de coupe par jet d'eau, il est d'abord découpé hors d'un panneau en acier fortement allié, des segments annulaires individuels (11) ou des anneaux et, ce-faisant ou ensuite, les segments annulaires (11) ou les anneaux sont coupés une ou plusieurs fois de l'extérieur vers l'in-térieur ou de l'intérieur vers l'extérieur à partir de leur diamètre ex-térieur ou d'un cercle de base (G₁), ceci conformément à la longueur respective des dents (13) et/ou de la profondeur désirée des dents,
ensuite, les segments annulaires (11) ou les anneaux sont chauffés et torsadés de manière hélicoïdale et, au niveau des dents (13), repoussés vers le côté de sorte que par rapport à la direction de coupe (S), le bord de coupe extérieur (14) se trouve en retrait sous un angle (β) et, finalement, les segments annulaires (11') et l'anneau sont soumis à un durcissement ou bien recouverts partiellement ou intégralement par une couche de chrome dure.

2. Procédé d'après les revendications 1 ou 2,
caractérisé en ce que
les segments (12, 12') dans les segments annulaires (11) ou dans les anneaux sont pratiqués de manière convexe ou droite et de préférence tangentiellement par rapport à un cercle de base (G₂) dans le sens de rotation d'une hélice (3) entraînée en rotation et portant ceux-ci.

3. Procédé d'après les revendications 1 ou 2,
caractérisé en ce que
les pointes (15) des dents (13) sont repoussées latéralement selon une valeur correspondant à l'épaisseur du matériau (M) des segments annulaires (11') ou des anneaux ou selon une valeur inférieure.

4. Procédé d'après une ou plusieurs des revendications 1 à 3,
caractérisé en ce que,
en tant qu'éléments de coupe de l'hélice (3), les dents (13) des segments annulaires (11') ou des anneaux sont orientées sous un angle γ par rapport à son axe de rotation.

5. Procédé d'après une ou plusieurs des revendications 1 à 4,
caractérisé en ce
qu'il est utilisé un outillage de presse, les faces de déformation (25, 26) d'une moitié supérieure et inférieure (22 ou 23) de l'outil ayant une forme hélicoïdale et que les bords extérieurs des demi-outils (22, 23) de l'outillage de presse comportent des dentures correspondant aux dents (13) des segments annulaires (11') ou des anneaux.
